(19) Europäisches Patentamt
European Patent Office
Office européen des brevets

(11) Veröffentlichungsnummer: **0 009 111**
**B1**

(12) **EUROPÄISCHE PATENTSCHRIFT**

(45) Veröffentlichungstag der Patentschrift: **16.02.83**

(21) Anmeldenummer: **79102909.3**

(22) Anmeldetag: **10.08.79**

(51) Int. Cl.³: **C 08 G 18/66,** A 43 B 13/04, C 08 G 18/10, C 08 G 18/32, C 08 L 75/00

(54) **Transparente, elastische Polyurethan-Harnstoff-Elastomere, Verfahren zu deren Herstellung und deren Verwendung zur Herstellung von Schuhsohlen.**

(30) Priorität: **28.08.78 DE 2837501**

(43) Veröffentlichungstag der Anmeldung:
**02.04.80 Patentblatt 80/7**

(45) Bekanntmachung des Hinweises auf die Patenterteilung:
**16.02.83 Patentblatt 83/7**

(84) Benannte Vertragsstaaten:
**DE FR IT**

(56) Entgegenhaltungen:
**DE - A - 1 694 667**
**DE - A - 2 156 477**
**DE - A - 2 622 951**
**DE - B - 1 240 654**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft**
**Carl-Bosch-Strasse 38**
**D-6700 Ludwigshafen (DE)**

(72) Erfinder: **Nissen, Dietmar, Dr. Dipl.-Chem.**
**Ziegelhaeuser Landstrasse 31**
**D-6900 Heidelberg (DE)**
Erfinder: **Stutz, Herbert, Dr. Dipl.-Chem.**
**Schneidemuehler Strasse 9C**
**D-7500 Karlsruhe 1 (DE)**
Erfinder: **Schuster, Ludwig, Dr. Dipl.-Chem.**
**Weinheimer Strasse 44**
**D-6703 Limburgerhof (DE)**
Erfinder: **Marx, Matthias, Dr. Dipl.-Chem.**
**Seebacher Strasse 49**
**D-6702 Bad Dürkheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 009 111 B1

# Transparente, elastische Polyurethan-Harnstoff-Elastomere, Verfahren zu deren Herstellung und deren Verwendung zur Herstellung von Schuhsohlen

Die Erfindung betrifft transparente, elastische Polyurethan-Harnstoff-Elastomere aus der Gruppe der Elastomeren aus

a) isocyanatgruppenhaltigen Präpolymeren auf Basis von difunktionellen Hydroxylverbindungen und 2,4-Toluylen-diisocyanat oder Gemischen aus 2,4- und 2,6-Toluylen-diisocyanat mit einem 2,6-Toluylen-diisocyanatgehalt kleiner als 45 Gew.%,

b) höhermolekularen Hydroxylverbindungen und gegebenenfalls niedermolekularen polyfunktionellen Verbindungen und

c) primären, 3,3',5,5'-tetraalkyl-substituierten 4,4'-Diamino-diphenylmethanen.

Es ist bekannt, aus elastischen Polyurethanmaterialien Schuhsohlen herzustellen. Dabei werden zwei flüssige Systemkomponenten — eine Polyol- und Polyisocyanatkomponente — in einem geeigneten Dosieraggregat miteinander vermischt und in Formen gehärtet, wobei gegebenenfalls das Schuhoberteil als Formendeckel fungiert und durch den Schäumvorgang direkt mit der Sohle verbunden wird.

Als mit Isocyanat reagierende Verbindungen werden Polyätherole und Polyesterole sowie niedermolekulare Kettenverlängerer und Vernetzer in Abmischung mit Schaumstabilisatoren, Katalysatoren, Treibmitteln und weiteren Additiven eingesetzt. Als Diisocyanat wird ausschließlich Diphenylmethandiisocyanat (MDI) in reiner Form, chemisch modifiziert und nach teilweiser Umsetzung mit Polyolen verwendet. Die so hergestellten Sohlenmaterialien sind undurchsichtig.

Auch durch Trocknen der Ausgangsstoffe und Verzicht auf Treibmittel können auf diese Weise keine transparenten Kompaktmassen erhalten werden.

Es ist ferner bekannt, daß elastische Polyurethanmassen aus Polyätherolen, Toluylen-diisocyanat und aromatischen Polyaminen als Kettenverlängerungsmittel gegebenenfalls transparent sein können. Als Polyamin wird meist 3,3'-Dichlor-4,4'-diamino-diphenylmethan verwendet, dessen toxikologische Eigenschaften nach verschiedenen Publikationen problematisch sein sollen (Dupont Firmenschrift Nr. 8/75—200—16/A, Adiprene ®Urethan Kautschuk, Typenübersicht und neuere Verarbeitungshinweise, Seite 42).

Nach Angaben der DE—A—16 94 667 wird ein fußmedizinisches Harz und Stützmittel aus beliebigen Polyisocyanaten, Polyolen, vorzugsweise Polypropylenether- und Polybutylenether-polyolen mit im wesentlichen sekundären Hydroxylgruppen und tetraalkylsubstituierten 4,4'-Diamino-diphenylmethanen hergestellt. Die erhaltenen Formkörper sind jedoch aufgrund der genannten Aufbaukomponenten sowie der als Füllstoffe eingesetzten Mikrohohlglaskugeln oder Mikroblasen aus Epoxi- oder Harnstoff-Formaldehyd-Kondensaten nicht transparent.

Nicht transparente, jedoch elastische und gegebenenfalls zellhaltige Formkörper auf Basis von Polyurethan-Polyharnstoff-Elastomeren werden ferner gemäß DE—A—26 22 951 hergestellt durch Umsetzung von üblichem Polyisocyanaten, vorzugsweise gegebenenfalls modifizierten 4,4'-Diphenylmethandiisocyanaten, Polyolen und aromatischen Di- bzw. Polyaminen nach dem RIM-Verfahren.

Aufgabe der vorliegenden Erfindung war es, transparente, elastische Polyurethan-Elastomere zu entwickeln, die insbesondere zur Herstellung von Schuhsohlen geeignet sind.

Diese Aufgabe wurde gelöst durch Polyurethan-Harnstoff-Elastomere, die erhalten werden durch Umsetzung von

a) isocyanatgruppenhaltigen Präpolymeren aus difunktionellen Hydroxylverbindungen mit Molekulargewichten von 800 bis 2500 und 2,4-Toluylen-diisocyanat oder Gemischen aus 2,4-Toluylen-diisocyanat und 2,6-Toluylen-diisocyanat mit einem 2,6-Toluylen-diisocyanatgehalt von weniger als 45 Gewichtsprozent, bezogen auf das Gesamtgewicht des Gemisches, und einem NCO-Gehalt von 2 bis 8 Gewichtsprozent, bezogen auf das Gewicht des Präpolymeren sowie einem Gehalt an monomeren Toluylen-diisocyanaten von 0,001 bis 2 Gewichtsprozent, bezogen auf das Gesamtgewicht,

b) höhermolekularen, di- bis tetrafunktionellen Hydroxylverbindungen mit Molekulargewichten von 400 bis 8000, in denen mindestens 30% der vorhandenen OH-Gruppen primäre Hydroxylgruppen sind sowie gegebenenfalls niedermolekularen tri- bis hexafunktionellen Verbindungen mit Molekulargewichten von 90 bis 500 und

c) primären ortho-substituierten 4,4'-Diamino-diphenylmethanen der Formel

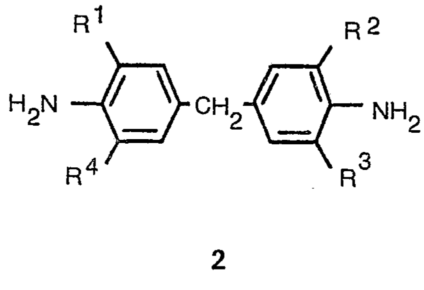

in der $R^1$, $R^2$, $R^3$ und $R^4$ gleich oder verschieden sind und einen Alkylrest mit 1 bis 3 Kohlenstoffatomen bedeuten.

Durch Umsetzung von 3,3',5,5'-Tetra-alkyl-4,4'-diaminodiphenylmethanen mit 1 bis 3 Kohlenstoffatomen im Alkylrest, die gelöst in hochmolekularen, polyfunktionellen Hydroxylverbindungen mit mindestens 30% "aktivierten" primären Hydroxylgruppen vorliegen, mit Präpolymeren auf Toluylendiisocyanatbasis, die nur sehr geringe Mengen freies Toluylendiisocyanat enthalten, werden überraschenderweise glasklare, elastische Polyurethan-Harnstoff-Elastomere erhalten.

Die kompakten, transparenten Polyurethan-Harnstoff-Elastomeren eignen sich hervorragend für neuartige, modisch interessante Schuhsohlen und können mit herkömmlichen Dosieraggregaten für geschäumte Polyurethansohlen hergestellt werden.

Falls ein weniger durchsichtiges Polyurethan-Harnstoff-Elastomeres gewünscht wird, kann der reaktionsfähigen Mischung nach Bedarf Luft beigemischt werden. Außerdem lassen sich die Produkte mit Pigmenten, löslichen Farbstoffen oder Metallpulvern einfärben, wozu diese Hilfsmittel üblicherweise einer Mischung aus den Komponenten (b) und (c) einverleibt werden. Auch mit nur teilweise löslichen Pigmenten, beispielsweise von Sicherheitsfarben mit langer Nachleuchtdauer, wie Kombinationen von langnachleuchtenden anorganischen Pigmenten auf Basis von Zink-, Zinkcadmium- und Erdalkalisulfid sowie fluoreszierenden organischen Pigmenten, lassen sich die Produkte einfärben, wobei aufgrund der Transparenz des Materials bereits mit geringen Pigmentanteilen, beispielsweise kleiner als 5 Gewichtsprozent, starke Nachleuchteffekte erzielt werden können.

Zu den zur Herstellung der erfindungsgemäßen Polyurethan-Harnstoff-Elastomeren verwendbaren Ausgangskomponenten a) bis c) ist folgendes auszuführen.

Als höhermolekulare polyfunktionelle Hydroxylverbindungen, wie sie unter a) und b) genannt werden, eignen sich vorzugsweise Polyesterole und insbesondere Polyätherole. In Betracht kommen jedoch auch andere hydroxylgruppenhaltige Polymere, beispielsweise Polyesteramide, Polyacetale, wie Polybutandiolformale und Polycarbonate, insbesondere solche, hergestellt aus Diphenylcarbonat und Hexandiol-1,6 durch Umesterung.

a) Für die Herstellung der isocyanatgruppenhaltigen Präpolymeren (a) geeignete difunktionelle Polyesterole können beispielsweise aus Dicarbonsäuren mit 2 bis 12, vorzugsweise 4 bis 8 Kohlenstoffatomen und zweiwertigen Alkoholen, gegebenenfalls unter Mitverwendung geringer Mengen von Aminoalkoholen oder Diaminen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebazinsäure sowie aromatische Dicarbonsäuren wie Phthalsäure, Isophthalsäure oder Terephthalsäure. Die Dicarbonsäuren können dabei sowohl einzeln als auch im Gemisch untereinander verwendet werden. Vorzugsweise verwendet werden aliphatische Dicarbonsäuren wie Adipinsäure, Glutarsäure und Bernsteinsäure allein oder in Mischungen.

Zur Herstellung der difunktionellen Polyesterole kann es gegebenenfalls vorteilhaft sein, anstelle der freien Carbonsäuren die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 16, vorzugsweise 2 bis 6 Kohlenstoffatomen wie Äthylenglykol, Diäthylenglykol, Triäthylenglykol, Butandiol-1,3 und -1,4, Pentandiol-1,5, Hexandiol-1,6, Decandiol-1,10, 2,2-Dimethylpropandiol-1,3, 2,2,4-Trimethylpentandiol-1,3, Propandiol-1,2, Dipropylenglykol und Tripropylenglykol. Je nach den gewünschten Eigenschaften können die mehrwertigen Alkohole allein oder gegebenenfalls in Mischungen untereinander oder mit geringen Mengen an Diaminen oder Aminoalkoholen wie Äthylendiamin, 1,4-Butylendiamin, 1,6-Hexamethyendiamin, Piperazin oder Äthanolamin verwendet werden. Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von $\omega$-Hydroxycarbonsäuren, beispielsweise $\omega$-Hydroxycapronsäure und vorzugsweise Polymerisationsprodukte von cyclischen Lactonen, beispielsweise gegebenenfalls substituierten $\varepsilon$-Caprolactonen.

Für die Herstellung des isocyanatgruppenhaltigen Präpolymeren geeignete difunktionelle Polyätherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Geeignete Alkylenoxide sind z.B Äthylenoxid, Propylenoxid, Epichlorhydrin, 1,2- und 2,3-Butylenoxid. Die Alkylenoxide können einzeln, alternierend nacheinander oder als Mischungen verwendet werden. Die Polyätherole sollten vorteilhafterweise zu 70—100% aus Propylenoxid aufgebaut sein, bevorzugt werden reine Propylenoxidpolyätherole verwendet. Als Startermoleküle kommen beispielsweise in Betracht: Wasser, Diole wie Äthylenglykol, Propylenglykol Resorcin, Hydrochinon oder Bisphenol A. Geeignete Polyäther sind ferner die hydroxylgruppenhaltigen Polymerisationsprodukte des Tetrahydrofurans. Als Polyacetale kommen vor allem wasserunlösliche Formale wie Polybutandiolformal oder Polyhexandiolformal in Betracht.

Die difunktionellen Hydroxylverbindungen besitzen Molekulargewichte von 800 bis 2500, vorzugsweise von 800 bis 1500.

Gegebenenfalls können im Gemisch mit den höhermolekularen difunktionellen Hydroxylverbindungen auch anteilmäßig niedermolekulare Dihydroxylverbindungen mit Molekulargewichten unter 300 mitverwendet werden. Im allgemeinen sollten dabei die molaren Verhältnisse der höher- und

niedermolekularen difunktionellen Hydroxylverbindungen einen Wert von ungefähr 1:1 nicht unterschreiten, da sonst gegebenenfalls leicht die Viskositäten zu stark ansteigen können. Als Dihydroxylverbindungen mit Molekulargewichten unter 300 seien beispielhaft genannt: Butandiol, Hexandiol, Di- und Triäthylenglykol und Di- und Tripropylenglykol.

Als Diisocyanate kommen für die Herstellung des isocyanatgruppenhaltigen Präpolymeren 2,4-Toluylendiisocyanat und Gemische aus 2,4- und 2,6-Toluylen-diisocyanat mit einem 2,6-Toluylendiisocyanatgehalt von weniger als 45 Gewichtsprozent, vorzugsweise von ungefähr 40 bis 20 Gewichtsprozent, bezogen auf das Gesamtgewicht des Gemisches in Frage. Vorzugsweise verwendet wird eine Mischung aus 2,4- und 2,6-Toluylen-diisocyanat im Gewichtsverhältnis 80:20.

Höhere Anteile als 45 Gewichtsprozent an 2,6-Toluylendiisocyanat in der Mischung oder andere aromatische Diisocyanate sind für die Herstellung der erfindungsgemäßen Polyurethan-Harnstoff-Elastomeren ungeeignet.

Zur Herstellung der isocyanatgruppenhaltigen Präpolymeren (a), die erfindungsgemäß NCO-Gehalte von 2 bis 8 Gewichtsprozent, vorzugsweise 4 bis 7 Gewichtsprozent, bezogen auf das Gewicht des Präpolymeren, besitzen und die Gehalte an monomeren Toluylen-diisocyanaten von 0,001 bis 2 Gewichtsprozent, bezogen auf das Gesamtgewicht, aufweisen, können die difunktionellen Hydroxylverbindungen bei Wassergehalten <0,1% direkt verwendet oder gegebenenfalls durch Behandeln bei höheren Temperaturen und unter vermindertem Druck entwässert und von gelösten Gasen befreit mit dem 2,4-Toluylen-diisocyanat oder Gemisch aus 2,4- und 2,6-Toluylen-diisocyanat umgesetzt werden. Bei größeren Ansätzen kann es zweckmäßig sein, zur besseren Kontrolle der Reaktion das Diisocyanat vorzulegen und die Dihydroxylverbindung kontinuierlich zulaufen zu lassen. Die Umsetzung erfolgt wie üblich durch Vermischen der Reaktionspartner und Umsetzung unter Rühren bei Temperaturen zwischen 60 und ca. 120°C, wobei es zur Vermeidung unerwünschter Nebenreaktionen im allgemeinen zweckmäßig ist, 100°C nicht zu überschreiten. Die Ausgangskomponenten werden solange miteinander umgesetzt, bis der theoretisch errechnete NCO-Gehalt erreicht oder leicht unterschritten wird.

b) Höhermolekulare, unter den Punkt B fallende di- bis tetrafunktionelle, vorzugsweise di- bis trifunktionelle Hydroxylverbindungen (b) besitzen Molekulargewichte von 400 bis 8000, vorzugsweise von 1500 bis 6500, wobei mindestens 30%, vorzugsweise 50 bis 100% der vorhandenen OH-Gruppen primäre Hydroxylgruppen sind. Als derartige Hydroxylverbindungen seien beispielhaft insbesondere Polyesterole und Polyätherole genannt.

Geeignete höhermolekulare Polyesterole mit 2 bis 4 Hydroxylgruppen im Molekül können grundsätzlich aus den Ausgangskomponenten der für die Herstellung der isocyanatgruppenhaltigen Präpolymeren geeigneten Polyesterole erhalten werden, indem man entsprechende Mengen an trifunktionellen Verbindungen, beispielsweise Triole, wie Glycerin, Trimethyloläthan, Trimethylolpropan und Hexantriol oder Tricarbonsäuren mitverwendet.

Geeignete höhermolekulare Polyätherole mit 2 bis 4 endständigen Hydroxylgruppen im Molekül sind Anlagerungsverbindungen von Äthylenoxid, Propylenoxid, Butylenoxiden, Epichlorhydrin oder anderen gegebenenfalls substituierten Alkylenoxiden mit 2 bis 4 Kohlenstoffatomen im Alkylenrest an Startermoleküle, die 2 bis 4 Zerewitinoff aktive Wasserstoffatome gebunden enthalten. Als Startermoleküle kommen neben Wasser und den obengenannten Diolen beispielsweise Triole, wie Glycerin, Trimethyloläthan, Trimethylolpropan, Hexantriol, Triäthanolamin und Triisopropanolamin, Tetrole, wie Pentaerythrit und aliphatische und aromatische Diamine, wie Äthylendiamin, 1,6-Hexamethylendiamin, 4,4'-Diamino-diphenylmethan, 2,4- und 2,6-Toluylen-diamin sowie die entsprechenden Isomerengemischen in Betracht. Gegebenenfalls können zur Herstellung der Polyätherole auch Mischungen von Startermolekülen mit 2 bis 4 reaktiven Wasserstoffatomen eingesetzt werden, oder es werden entsprechende Mischungen aus Polyätherdiolen und -triolen verwendet.

Zur Herstellung der Polyätherole können die gegebenenfalls substituierten Alkylenoxide sowohl im Gemisch untereinander, nacheinander oder abwechselnd nacheinander polymerisiert werden, sofern die Bedingung, daß im Endprodukt mindestens 30% primäre Hydroxylgruppen vorhanden sein müssen, erfüllt ist. Bevorzugt werden Polyätherole aus Propylenoxid und Äthylenoxid, bei denen zumindest ein Teil des Äthylenoxids als endständiger Block angeordnet ist. Solche Polyäther können erhalten werden, indem man z.B. auf den Starter zunächst das Propylenoxid und daran anschließend das Äthylenoxid aufpolymerisiert oder zunächst das gesamte Propylenoxid im Gemisch mit einem Teil des Äthylenoxids zusammen copolymerisiert und den Rest des Äthylenoxids daran anschließend weiterpolymerisiert oder schrittweise zunächst einen Teil des Äthylenoxids, dann das gesamte Propylenoxid und dann den Rest des Äthylenoxids auf den Starter aufpolymerisiert.

Die höhermolekularen di- bis tetrafunktionellen Hydroxylverbindungen können gegebenenfalls mit niedermolekularen tri- bis hexafunktionellen Verbindungen mit Molekulargewichten von 90 bis 500, vorzugsweise 90 bis 200, gemischt werden. Als derartige niedermolekulare Verbindungen seien beispielsweise genannt: Polyole wie Glycerin, Trimethyloläthan, Trimethylolpropan, Pentaerythrit und Sorbit, Alkanolamine, wie Diäthanolamin und Triäthanolamin sowie Addukte aus den genannten Polyolen, Alkanolaminen und aliphatischen und aromatischen Diaminen mit den obengenannten Alkylenoxiden.

c) Als Komponente (c) kommen primäre orthosubstituierte 4,4'-Diamino-diphenylmethane der Formel

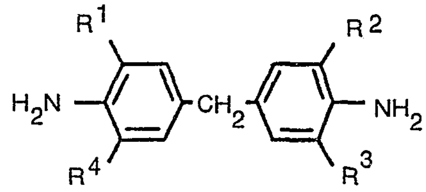

in der $R^1$, $R^2$, $R^3$ und $R^4$ gleich oder verschieden sind und einen Alkylrest mit 1 bis 3 Kohlenstoffatomen wie den Methyl-, Äthyl- oder Propylrest, bedeuten, in Betracht. Im einzelnen seien beispielsweise genannt: 3,3',5,5' - Tetramethyl - 4,4' - diamino - diphenylmethan, 3,3',5,5' - Tetraäthyl - 4,4' - diamino - diphenylmethan, 3,5 - Dimethyl - 3',5' - diäthyl - 4,4' - diamino - diphenylmethan, 3,5 - Dimethyl - 3',5' - dipropyl - 4,4' - diamino - diphenylmethan und 3,3' - Dimethyl - 5,5' - diäthyl - 4,4' - diamino - diphenylmethan sowie beliebige Gemische dieser 3,3',5,5' - Tetraalkyl - 4,4' - diamino - diphenylmethane. Vorzugsweise verwendet man 3,3',5,5' - Tetramethyl - 4,4' - diaminodiphenylmethan, 3,5 - Dimethyl - 3',5' - diäthyl - 4,4' - diaminodiphenylmethan und 3,3',5,5' - Tetraäthyl - 4,4' - diamino - diphenylmethan.

Zur Herstellung der transparenten, elastischen Polyurethan-Harnstoff-Elastomeren werden die Ausgangskomponenten a, b und c in Gegenwart von Katalysatoren, die die Reaktion zwischen den Isocyanatgruppen der Präpolymeren und den Hydroxylgruppen beschleunigten, bei Temperaturen von ungefähr 10° bis 75°C, vorzugsweise 20 bis 40°C für die Polyolkomponente und 30 bis 60°C für die Isocyanatkomponente intensiv vermischt, in Formen gegossen und aushärten lassen. Bevorzugt vereinigt man die Komponenten (b) und (c) mit dem Katalysator zu einer Polyolkomponente, wobei die Komponente (b) und (c) in solchen Mengen verwendet werden, daß die Hydroxyl- zu den Aminogruppen in einem Verhältnis von 1:0,5 bis 2,5 stehen, und vermischt diese bei der Verarbeitung mit dem isocyanatgruppenhaltigen Präpolymeren. Das chemische Äquivalenzverhältnis der Summe der Hydroxyl- und Aminogruppen zu den NCO-Gruppen des Präpolymeren in der Reaktionsmischung zur Herstellung der erfindungsgemäßen Polyurethan-Harnstoff-Elastomeren liegt vorzugsweise zwischen 0,8 bis 1,15:1 und ist insbesondere 0,95 bis 1,05:1. Katalysatoren, welche die Reaktion zwischen den NCO-Endgruppen des Präpolymeren und den Hydroxylgruppen beschleunigen, sind die nach dem Stand der Technik bekannten und üblichen tertiären Amine wie z.B. Triäthylamin, Dimethylcyclohexylamin, N-Methyl-morpholin, N,N'-Dimethyl-piperazin, Diazabicyclo-(2,2,2)-octan und ähnliche sowie besonders organische Metallverbindungen wie Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,01 bis 1,0 Mol/kg Hydroxylverbindungen eingesetzt, gegebenenfalls kann jedoch auch auf den Zusatz von Katalysatoren ganz verzichtet werden.

Als Katalysatoren zur Beschleunigung der Reaktion zwischen den NCO-Gruppen des Präpolymeren und den Aminogruppen können übliche aliphatische und aromatische Carbonsäuren verwendet werden. Aus den beschriebenen Reaktionsmischungen lassen sich bei Verwendung herkömmlicher Niederdruckverschäummungsmaschinen und geeigneter Formwerkzeuge völlig transparente, elastische Formkörper wie z.B. Schuhsohlen herstellen. Dabei kann es für die Entfernung von Luftblasen vorteilhaft sein, mehrere geschlossene beheizte Formwerkzeuge über einen gemeinsamen Angußkanal zu befüllen und dann die in einer rotierfähigen Vorrichtung aufgehängten Formwerkzeuge mit einer Umdrehungszahl von 100 bis 2000 Umdrehungen pro Minute bis zur Durchhärtung des Materials rotieren zu lassen. Zur Erzielung modischer Farbeffekte können in der Reaktionsmischung Farbstoffe, wie Metallkomplexfarbstoffe vorwiegend aus der Azoreihe, gelöst oder feinste Metallpulver, wie Aluminium, Kupfer, Zinn, Magnesium dispergiert werden. Zur Verhinderung oder zumindest Verlangsamung der Vergilbung können handelsübliche UV-Absorber und Antioxidantien, wie sterisch gehinderte Amine, Phenole, Bisphenole und Benzotriazole gelöst in organischen Lösungsmitteln, beispielsweise Dichlormethan zugesetzt werden.

Wie bereits ausgeführt wurde, eignen sich die transparenten, elastischen Polyurethan-Harnstoff-Elastomeren insbesondere zur Herstellung von Schuhsohlen.

Die in den Beispielen genannten Teile sind Gewichtsteile.

Beispiel 1

Komponente A:

100 Teile einer Polyätherolmischung mit einer OH-Zahl von 35 und einer Viskosität bei 25°C von 1300 mPa.s bestehen aus

98,9 Teilen eines Polyätherols der OH-Zahl 25, das durch Addition von Propylenoxid und Äthylenoxid an Trimethylolpropan erhalten wurde und ungefähr 85% primäre Hydroxylgruppen besitzt und

1,1 Teilen eines Polyätherols der OH-Zahl 940, das durch Addition von Äthylenoxid an Trimethylolpropan erhalten wurde,

werden mit 11,0 Teilen 3,3',5,5'-Tetramethyl-4,4'-diamino-diphenylmethan gemischt und unter Rühren und Luftausschluß auf 90°C erwärmt. Nach vollständiger Lösung des 3,3',5,5' -Tetramethyl - 4,4' - diamino - diphenylmethans und Abkühlung der Mischung auf 25°C werden 0,56 Teile Diazabicyclooctan in 1,14 Teilen Dipropylenglykol und 0,13 Teile Dibutylzinndilaurat hinzugefügt.

Komponente B:

Zur Herstellung des isocyanatgruppenhaltigen Präpolymeren werden 100 Teile eines Polyätherols mit der OH-Zahl 108, hergestellt durch Addition von Propylenoxid an Dipropylenglykol, mit 31,35 Teilen eines handelsüblichen Gemisches aus 2,4- und 2,6-Toluylen-diisocyanat (Gewichtsverhältnis 80:20) bei Temperaturen von 80°C in 2 Stunden zur Reaktion gebracht. Der NCO-Gehalt des erhaltenen Präpolymeren beträgt 5,74 Gewichtsprozent, der Gehalt an monomeren Toluylendiisocyanaten ist 1,2 Gewichtsprozent.

Die Komponente A wird auf eine Temperatur von 30°C und die Komponente B auf eine Temperatur von 45°C erwärmt, mittels eines Zweikomponenten-Dosiermischgerätes im Verhältnis 100 Teile der Komponente A zu 109 Teile der Komponente B vermischt und in eine auf 80° temperierte Aluminiumform gegossen. Die Reaktionsmischung beginnt nach 20 Sekunden abzubinden. Das völlig transparente Formteil läßt sich nach 5 Minuten entformen. Es besitzt eine Gesamtrohdichte von 1,07 g/cm$^3$.

Die Messung nach RAL—RG 702/1 ergab folgende physikalische Eigenschaften für das Formteil aus dem erfindungsgemäßen Polyurethan-Harnstoff-Elastomeren:

| | |
|---|---|
| Härte (Shore A) | 69 |
| Reißfestigkeit (N/cm$^2$) | 5,9 |
| Bruchdehnung (%) | 760 |
| Weiterreißfestigkeit (N/mm) | 8,6 |
| Dauerbiegeverhalten | |
| Sticherweit. n. 30 000 H (mm) | <4 |
| Abrieb (g) | ⩽0,30 |

Damit wird die in RAL—RG 702/1 (Sohlen und Sohlenmaterial aus geschäumtem Polyurethan; Ausgabe Dez. 1976; Beuth-Verlag GmbH, 1000 Berlin 30) definierte Gütesicherung für Qualitätssohlen aus Polyurethan erfüllt.

Beispiel 2

Komponente A:

Man verfährt analog den Angaben von Beispiel 1, verwendet jedoch anstelle von 3,3',5,5'-Tetramethyl - 4,4' - diamino - diphenylmethan 12,4 Teile 3,3' - Dimethyl - 5,5' - diäthyl - 4,4' - diamino - diphenylmethan.

Komponente B:

entspricht der von Beispiel 1.

100 Teile der auf 30°C erwärmten Komponente A werden mit 102 Teilen der auf 45°C erwärmten Komponente B mit einem Handmischer homogenisiert und in eine auf 80°C temperierte Aluminiumform gegossen.

Prüfkörper aus dem nach 5 Min. entformten Formteil wiesen folgende physikalische Eigenschaften (gemessen nach RAL-RG 702/1) auf:

| | |
|---|---|
| Härte (Shore A) | 52 |
| Reißfestigkeit (N/cm$^2$) | 2,5 |
| Bruchdehnung (%) | 960 |
| Weiterreißfestigkeit (N/mm) | 6,4 |

| | |
|---|---|
| Dauerbiegeverhalten | |
| Sticherweit. nach 30.000 H (mm) | keine |

Beispiel 3

Komponente A:

Man verfährt analog den Angaben von Beispiel 1, verwendet jedoch anstelle von 3,3',5,5' - Tetramethyl - 4,4' - diamino - diphenylmethan 13,8 Teile 3,3',5,5' - Tetraäthyl - 4,4 - diamino - diphenylmethan.

Komponente B:

entspricht der von Beispiel 1.

Die Umsetzung der Komponente A und B und die Herstellung der Formteile wird analog Beispiel 2 durchgeführt.

Die Polyurethan-Formteile besitzen, gemessen nach RAL-RG 702/1, folgende physikalischen Eigenschaften:

| | |
|---|---|
| Härte (Shore A) | 53 |
| Reißfestigkeit ($N/cm^2$) | 2,2 |
| Bruchdehnung (%) | 650 |
| Dauerbiegeverhalten | |
| Sticherweit. nach 30 000 H (mm) | ⩽4 |

Beispiel 4

Komponente A:

Man verfährt analog den Angaben von Beispiel 1, verwendet jedoch anstelle der dort genannten Polyätherolmischung

100 Teile einer Mischung aus

99,1 Teilen eines Polyätherols der OH-Zahl 25, das durch Addition von Propylenoxid und Äthylenoxid an Trimethylolpropan erhalten wurde und ungefähr 85% primäre Hydroxylgruppen besitzt, und

0,9 Teilen Triäthanolamin

Komponente B:

entspricht der von Beispiel 1

100 Teile der Komponente A und 108 Teile der Komponente B werden analog Beispiel 1 zu Formteilen verarbeitet, die gemessen nach RAL-RG 702/1 folgende physikalische Eigenschaften ergaben:

| | |
|---|---|
| Härte (Shore A) | 67 |
| Reißfestigkeit ($N/cm^2$) | 4,9 |
| Bruchdehnung (%) | 730 |
| Weiterreißfestigkeit (N/mm) | 8,2 |
| Dauerbiegeverhalten | |
| Sticherweit. n. 30 000 H (mm) | ⩽4 |

Beispiel 5

Komponente A:

Zur Herstellung der Komponente A verfährt man analog Beispiel 4, verwendet jedoch anstelle von Triäthanolamin 1,3 Teile eines Äthylendiamin-Propylenoxid-Addukts mit einer OH-Zahl von 770 und einer Viskosität von 30 000 mPa.s bei 25°C.

Komponente B:

entspricht der von Beispiel 1

Die Umsetzung der Komponenten A und B wird entsprechend Beispiel 4 durchgeführt.

Das Polyurethan-Formteil besaß folgende physikalischen Eigenschaften, gemessen nach RAL-RG 702/1:

| | |
|---|---|
| Härte (Shore A) | 67 |
| Reißfestigkeit ($N/cm^2$) | 3,9 |
| Bruchdehnung (%) | 600 |
| Weiterreißfestigkeit (N/mm) | 8,4 |
| Dauerbiegeverhalten | |
| Sticherweit. n. 30 000 H (mm) | ⩽3 |

Beispiel 6

In 100 Teilen einer Polyätherolmischung mit einer OH-Zahl von 35 und einer Viskosität bei 25° von 1300 mPa.s, bestehend aus

98,6 Teilen eines Polyätherols der OH-Zahl 25, das durch Addition von Propylenoxid und Äthylenoxid an Trimethylolpropan erhalten wurde und ungefähr 85% primäre Hydroxylgruppen besitzt, und

1,4 Teilen eines Polyätherols der OH-Zahl 770, das durch Addition von Propylenoxid an Äthylendiamin erhalten wurde,

werden 14,1 Teile 3,3',5,5'-Tetramethyl-4,4'-diamino-diphenylmethan, wie in Beispiel 1 beschrieben, gelöst. Nach Abkühlung der Lösung auf 25°C werden 0,60 Teile Diazabicyclooctan in 1,2 Teilen Dipropylenglykol und 0,14 Teile Dibutylzinndilaurat hinzugefügt.

Komponente B:

entspricht der von Beispiel 1

100 Teile der auf 30°C erwärmten Komponente A werden mit 118 Teilen der auf 50°C erwärmten Komponente B analog den Angaben von Beispiel 1 zur Reaktion gebracht und zu Formteilen verarbeitet.

An dem nach 3 Minuten entformten Polyurethan-Material wurden nach RAL-RG 702/1 folgende physikalischen Eigenschaften gemessen

| | |
|---|---|
| Härte (Shore A) | 73 |
| Reißfestigkeit ($N/cm^2$) | 4,1 |
| Bruchdehnung (%) | 450 |
| Weiterreißfestigkeit (N/mm) | 8,2 |
| Dauerbiegeverhalten | |
| Sticherw. n. 30 000 H (mm) | ⩽4 |
| Abrieb (g) | 0,30 |

Beispiel 7

Komponente A:

In 100 Teilen eines Polyätherols mit der OH-Zahl 35, das durch Addition von Propylenoxid und Äthylenoxid an Glyzerin erhalten wurde und ungefähr 75% primäre Hydroxylgruppen besitzt werden 11,1 Teile 3,3',5,5' - Tetramethyl - 4,4' - diamino - diphenylmethan, wie in Beispiel 1 beschrieben, gelöst. Die ebenfalls dort beschriebenen Katalysatoren werden in gleicher Menge zugefügt.

Komponente B:

entspricht der von Beispiel 1

100 Teile der Komponente A werden mit 106 Teilen der Komponente B analog den Angaben von Beispiel 1 vermischt und zu Formteilen verarbeitet.

An den Formteilen wurden gemessen nach RAL-RG 702/1 folgende physikalischen Eigenschaften ermittelt:

| | |
|---|---|
| Härte (Shore A) | 68 |
| Reißfestigkeit ($N/cm^2$) | 3,6 |
| Bruchdehnung (%) | 480 |

| | |
|---|---|
| Weiterreißfestigkeit (N/mm) | 8,7 |
| Dauerbiegeverhalten | |
| Sticherweit. n. 30 000 H (mm) | 4 |

**Patentansprüche**

1. Transparente, elastische Polyurethan-Harnstoff-Elastomere, erhalten durch Umsetzung von

a) isocyanatgruppenhaltigen Präpolymeren aus difunktionellen Hydroxylverbindungen mit Molekulargewichten von 800 bis 2500 und 2,4-Toluylen-diisocyanat oder Gemischen aus 2,4- und 2,6-Toluylen-diisocyanat mit einem 2,6-Toluylen-diisocyanatgehalt von weniger als 45 Gewichtsprozent, bezogen auf das Gesamtgewicht des Gemisches, und einem NCO-Gehalt von 2 bis 8 Gewichtsprozent, bezogen auf das Gewicht des Präpolymeren sowie einem Gehalt an monomeren Toluylen-diisocyanaten von 0,001 bis 2 Gewichtsprozent, bezogen auf das Gesamtgewicht.

b) höhermolekularen, di- bis tetrafunktionellen Hydroxylverbindungen mit Molekulargewichten von 400 bis 8000, in denen mindestens 30% der vorhandenen OH-Gruppen primäre Hydroxylgruppen sind sowie gegebenenfalls niedermolekularen tri- bis hexafunktionellen Verbindungen mit Molekulargewichten von 90 bis 500 und

c) primären ortho-substituierten 4,4'-Diamino-diphenylmethanen der Formel

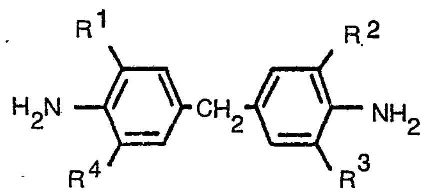

in der $R^1$, $R^2$, $R^3$ und $R^4$ gleich oder verschieden sind und einen Alkylrest mit 1 bis 3 Kohlenstoffatomen bedeuten.

2. Transparente, elastische Polyurethan-Harnstoff-Elastomere gemäß Anspruch 1, dadurch gekennzeichnet, daß das Verhältnis von Gesamt-Hydroxyl zu Aminogruppen 1:0,5 bis 2,5 und das Verhältnis der Summe aus Gesamt-Hydroxyl- und Aminogruppen zu NCO-Gruppen des Präpolymeren 0,8 bis 1,15:1 sind.

3. Verfahren zur Herstellung von transparenten, elastischen Polyurethan-Harnstoff-Elastomeren, dadurch gekennzeichnet, daß man

a) isocyanatgruppenhaltige Präpolymere aus difunktionellen Hydroxylverbindungen mit Molekulargewichten von 800 bis 2500 und 2,4-Toluylendiisocyanat oder Gemischen aus 2,4- und 2,6-Toluylendiisocyanat mit einem 2,6-Toluylendiisocyanatgehalt von weniger als 45 Gewichtsprozent, bezogen auf das Gesamtgewicht des Gemisches, und einem NCO-Gehalt von 2 bis 8 Gewichtsprozent, bezogen auf das Gewicht des Präpolymeren sowie einem Gehalt an monomeren Toluylen-diisocyanaten von 0,001 bis 2 Gewichtsprozent, bezogen auf das Gesamtgewicht.

b) höhermolekularen, di- bis tetrafunktionellen Hydroxylverbindungen mit Molekulargewichten von 400 bis 8000, in denen mindestens 30% der vorhandenen OH-Gruppen primäre Hydroxylgruppen sind sowie gegebenenfalls niedermolekularen tri- bis hexafunktionelle Verbindungen mit Molekulargewichten von 90 bis 500 und

c) primäre ortho-substituierte 4,4'-Diamino-diphenylmethane der Formel

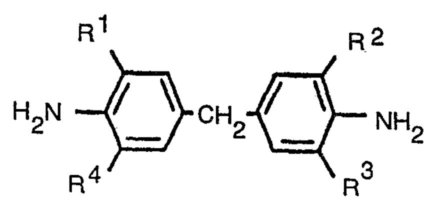

in der $R^1$, $R^2$, $R^3$ und $R^4$ gleich oder verschieden sind und einen Alkylrest mit 1 bis 3 Kohlenstoffatomen bedeuten, in Gegenwart von Katalysatoren bei Temperaturen von 10 bis 75°C mischt und aushärten läßt.

4. Verfahren gemäß Anspruch 3, dadurch gekennzeichnet, daß das Verhältnis von Gesamt-Hydroxyl- zu Aminogruppen 1:0,5 bis 2,5 beträgt.

5. Verfahren gemäß Anspruch 3, dadurch gekennzeichnet, daß das Verhältnis der Summe aus Gesamt-Hydroxyl- und Aminogruppen zu NCO-Gruppen des Präpolymeren 0,8 bis 1,15:1 beträgt.

6. Verwendung der transparenten, elastischen Polyurethan-Harnstoff-Elastomeren nach Anspruch 1 zur Herstellung von Schuhsohlen.

**Revendications**

1. Elastomère polyuréthane-urée, élastique, transparent, obtenu par réaction de:

a) prépolymères à groupes isocyanate de composés hydroxylés difonctionnels à poids moléculaires de 800 à 2500 et de 2,4-toluylènediisocyanate ou de mélanges de 2,4- et 2,6-toluylène-diisocyanate avec une quantité de 2,6-toluylène-diisocyanate inférieure à 45% en poids, rapportée au poids total du mélange, et une teneur en NCO de 2 à 8% en poids, rapportée au poids du prépolymère, ainsi qu'une teneur en toluylène-diisocyanates monomères de 0,001 à 2% en poids, rapportée au poids total,

b) composés hydroxylés di- à tétrafonctionnels, de poids moléculaires élevés, de 400 à 8000, dans lesquels au moins 30% des groupes OH présents sont des groupes hydroxyle primaires, ainsi qu'éventuellement de composés tri- à hexafonctionnels de faibles poids moléculaires, de 90 à 500, et

c) 4,4'-diamino-diphénylméthanes primaires, substitués en position ortho, de formule

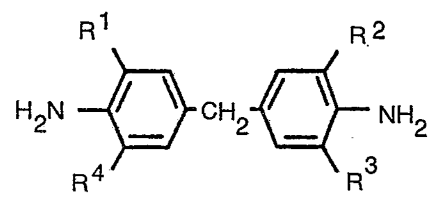

dans laquelle $R^1$, $R^2$, $R^3$ et $R^4$ sont identiques ou différents et représentent un reste alkyle ayant 1 à 3 atomes de carbone.

2. Elastomere polyuréthane-urée, élastique, transparent, selon la revendication 1, caractérisé par le fait que le rapport entre l'ensemble des groupes hydroxyle et les groupes amino est de 1/0,5 à 2,5 et le rapport entre la somme de l'ensemble des groupes hydroxyle et groupes amino et les groupes NCO du prépolymère est de 0,8 à 1,15/1.

3. Procédé de préparation d'élastomères polyuréthane-urée élastiques transparents, caractérisé par le fait qu'on mélange, à des températures de 10 à 75°C, en présence de catalyseurs, des:

a) prépolymères à groupes isocyanate de composés hydroxylés difonctionnels à poids moléculaires de 800 à 2500 et de 2,4-toluylènediisocyanate ou de mélanges de 2,4- et 2,6-toluylène-diisocyanate avec une quantité de 2,6- toluylène-diisocyanate inférieure à 45% en poids, rapportée au poids total du mélange, et une teneur en NCO de 2 à 8% en poids, rapportée au poids du prépolymère, ainsi qu'une teneur en toluylène-diisocyanates monomères de 0,001 à 2% en poids, rapportée au poids total,

b) composés hydroxylés di- à tétrafonctionnels, de poids moléculaires élevés, de 400 à 8000, dans lesquels au moins 30% des groupes OH présents sont des groupes hydroxyle primaires, ainsi qu'éventuellement des composés tri- à hexafonctionnels de faibles poids moléculaires, de 90 à 500, et

c) 4,4'-diamino-diphénylméthanes primaires, substitués en position ortho, de formule

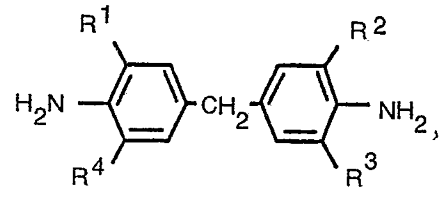

dans laquelle $R^1$, $R^2$, $R^3$ et $R^4$ sont identiques ou différents et représentent un reste alkyle ayant 1 à 3 atomes de carbone, puis qu'on fait durcir le mélange.

4. Procédé selon la revendication 3, caractérisé par le fait que le rapport entre l'ensemble des groupes hydroxyle et les groupes amino est de 1/0,5 à 2,5.

5. Procédé selon la revendication 3, caractérisé par le fait que le rapport entre la somme de l'ensemble des groupes hydroxyle et groupes amino et les groupes NCO du prépolymère est de 0,8 à 1,15/1.

6. Utilisation des élastomères polyuréthane-urée, élastiques, transparents, selon la revendication 1, pour la fabrication de semelles.

**Claims**

1. Transparent, resilient polyurethane/urea elastomers, obtained by reacting

a) prepolymers, containing isocyanate groups, of difunctional hydroxy compounds with molecular weights of 800 to 2,500 and toluylene 2,4-diisocyanate or mixtures of toluylene 2,4- and 2,6-diisocyanate with a toluylene 2,6-diisocyanate content of less than 45 per cent by weight, based on the total weight of the mixture, and an NCO content of 2 to 8 per cent by weight, based on the weight of the prepolymer, as well as a content of monomeric toluylene diisocyanates of 0.001 to 2 percent by weight, based on the total weight,

b) higher-molecular di-, tri- or tetra-functional hydroxy compounds with molecular weights of 400 to 8,000, in which at least 30% of the OH groups present are primary hydroxyl groups, and, if appropriate, low-molecular tri-, tetra-, penta- or hexa-functional compounds with molecular weights of 90 to 500, and

c) primary ortho-substituted 4,4′-diamino-diphenylmethanes of the formula

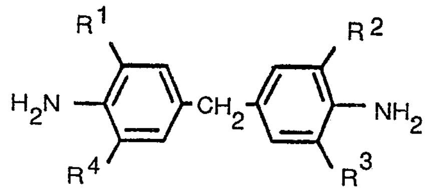

in which $R^1$, $R^2$, $R^3$ and $R^4$ are identical or different and denote an alkyl radical with 1 to 3 carbon atoms.

2. Transparent, resilient polyurethane/urea elastomers according to claim 1, wherein the ratio of total hydroxyl to amino groups is 1:0.5 to 2.5 and the ratio of the sum of total hydroxyl groups and amino groups to NCO groups of the prepolymer is 0.8 to 1.15:1.

3. Process for the preparation of transparent, resilient polyurethane/urea elastomers, wherein

a) prepolymers, containing isocyanate groups, of difunctional hydroxy compounds with molecular weights of 800 to 2,500 and toluylene 2,4-diisocyanate or mixtures of toluylene 2,4- and 2,6-diisocyanate with a toluylene 2,6-diisocyanate content of less than 45 per cent by weight, based on the total weight of the mixture, and an NCO content of 2 to 8 per cent by weight, based on the weight of the prepolymer, as well as a content of monomeric toluylene diisocyanates of 0.001 to 2 percent by weight, based on the total weight,

b) higher-molecular di-, tri- or tetra-functional hydroxy compounds with molecular weights of 400 to 8,000, in which at least 30% of the OH groups present are primary hydroxyl groups, and, if appropriate, low-molecular tri-, tetra-, penta- or hexa-functional compounds with molecular weights of 90 to 500, and

c) primary ortho-substituted 4,4′-diamino-diphenylmethanes of the formula

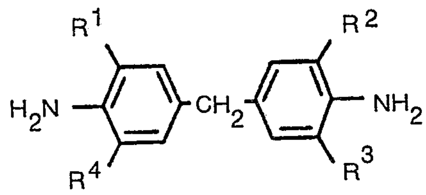

in which $R^1$, $R^2$, $R^3$ and $R^4$ are identical or different and denote an alkyl radical with 1 to 3 carbon atoms, are mixed in the presence of catalysts at temperatures 10 to 75°C and the mixture is allowed to harden.

4. Process according to claim 3, wherein the ratio of total hydroxyl groups to amino groups is 1:0.5 to 2.5.

5. Process according to claim 3, wherein the ratio of the sum of total hydroxyl groups and amino groups to NCO groups in the prepolymer is 0.8 to 1.15:1.

6. Use of the transparent, resilient polyurethane/urea elastomers according to claim 1 for the preparation of soles for shoes.